# EUROPEAN PATENT APPLICATION

(11) **EP 4 625 782 A1**
(43) Date of publication of application: **01.10.2025**
(21) Application number: 24184187.3
(22) Date of filing: 25.06.2024
(51) Int. Cl.: H02K 15/00

(54) **STATOR ASSEMBLY MACHINING SYSTEM**

(30) Priority: 27.03.2024 KR 20240041930
(71) Applicant: AXBIS Co., Ltd., Daejeon (KR)
(72) Inventor: KIM, Myoung Jin, Daejeon 34023 (KR); PARK, Kyung Suk, Daejeon 34011 (KR); LEE, Ji Ho, Daejeon 34022 (KR); SHIN, Hee Sung, Daejeon 35210 (KR); YANG, Jin Mo, Daejeon 35346 (KR)
(74) Representative: Urizar Anasagasti, Jesus Maria

(57) **Abstract**

Disclosed is a stator assembly machining system. The stator assembly machining system configured to perform a series of processes for machining a plurality of hairpins by receiving a stator assembly includes a stator assembly loading part, a hairpin cutting part configured to perform a cutting process of an end part of each of the plurality of hairpins, a hairpin welding part configured to perform a welding process of the end part of each of the plurality of hairpins, a stator assembly unloading part configured to unload the stator assembly supplied from the hairpin welding part, and a stator assembly transfer part configured to transfer the stator assembly to the stator assembly loading part, the hairpin cutting part, the hairpin welding part, and the stator assembly unloading part while supporting the stator assembly, wherein the stator assembly transfer part includes a stator assembly transfer jig, and a jig transfer rail.

## Description

### Cross reference to related application

The present application claims priority to Korean Patent Application No. 10-2024-0041930, filed March 27, 2024, the entire contents of which are incorporated herein for all purposes by this reference.

### Background of the invention and field of the Invention

The present disclosure relates generally to a stator assembly machining system. More particularly, the present disclosure relates to a stator assembly machining system, in which while performing a series of processes for machining a plurality of hairpins in a stator assembly composed of a stator and the plurality of hairpins, waiting time between each of the processes is minimized, thereby improving the speed of the hairpin machining processes, and the stator and the plurality of hairpins are stably supported, thereby minimizing a machining defect rate, and enhancing the accuracy and productivity of the hairpin machining processes

### Description of the Related Art

Recently, with increase in demand for an electric vehicle, research to improve the output of an electric motor is being actively conducted. A method of using hairpins in a motor to increase slot space factor and increase power density by increasing speed is being used. That is, the technology of inserting hairpins with quadrangular cross-sections into the slots of a stator and electrically connecting them is being used.

Multiple hairpins are inserted into the slots of the stator, and welding is required to be repeatedly performed to electrically connect each end thereof. To minimize welding defects, the ends of the multiple hairpins protruding from the slots are required to have the same heights. Otherwise, a contact defect and a welding defect at the welded portion of each hairpin occur, causing the problem that the durability of a motor is easily deteriorated.

There is a need for development of a hairpin welding system, in which cutting to align the ends of the multiple hairpins, which are inserted into and protrude from the slots of the stator, to the same heights, and welding to electrically connect the ends after the cutting are performed in a single system to improve productivity and minimize welding defect rates.

Accordingly, there is requirement for a stator assembly machining system, in which while performing a series of processes for machining a plurality of hairpins in a stator assembly composed of a stator and the plurality of hairpins, waiting time between each of the processes is minimized, thereby improving the speed of the hairpin machining processes, and the stator and the plurality of hairpins are stably supported, thereby minimizing a machining defect rate, and enhancing the accuracy and productivity of the hairpin machining processes.

### Document of Related Art

(Patent Document 1) US 2020-0153319 'A METHOD AND DEVICE FOR POSITIONING AND CLAMPING WIRE ENDS FOR ELECTRIC MACHINES' (filed June 12, 2018)

### Summary of the invention

Accordingly, the present disclosure has been made keeping in mind the above problems occurring in the related art, and the present disclosure is intended to propose a stator assembly machining system, in which by using a stator assembly transfer jig configured to support a stator and a plurality of hairpins while a stator assembly is seated to perform a series of processes for machining the plurality of hairpins while circularly transferring the stator assembly composed of the stator and the plurality of hairpins, the overall size of the stator assembly machining system is miniaturized and the series of processes are performed independently without interfering with each other, so that waiting time between each process can be minimized, thereby improving the speed of the hairpin machining processes, and the stator and the plurality of hairpins can be stably supported while performing the series of processes, thereby minimizing the defect rate of machining, such as cutting and welding, and improving the accuracy and productivity of the hairpin machining processes.

The technical purposes of the present disclosure are not limited to those mentioned above, and other technical purposes not mentioned will be clearly understood by those skilled in the art from the description below.

In order to achieve the objectives of the present disclosure, there is provided a stator assembly machining system configured to perform a series of processes for machining a plurality of hairpins by receiving a stator assembly composed of a stator and the plurality of hairpins inserted into the stator, the system including: a stator assembly loading part configured to load the stator assembly; a hairpin cutting part configured to perform a cutting process of an end part of each of the plurality of hairpins by receiving the stator assembly from the stator assembly loading part; a hairpin welding part configured to perform a welding process of the end part of each of the plurality of hairpins by receiving the stator assembly from the hairpin cutting part; a stator assembly unloading part configured to unload the stator assembly supplied from the hairpin welding part; and a stator assembly transfer part configured to transfer the stator assembly to the stator assembly loading part, the hairpin cutting part, the hairpin welding part, and the stator assembly unloading part while supporting the stator assembly, wherein the stator assembly transfer part includes: a stator assembly transfer jig that supports the stator and the plurality of hairpins while the stator assembly loaded from the stator assembly loading part is seated therein; and a jig transfer rail that allows the stator assembly transfer jig to be circularly transferred to the stator assembly loading part, the hairpin cutting part, the hairpin welding part, and the stator assembly unloading part sequentially while supporting the stator assembly transfer jig.

In this case, the stator assembly transfer jig may include: a jig body configured to accommodate the stator assembly; a stator fixing part disposed on an upper part of the jig body and configured to fix or unfix the stator; a hairpin clamping part disposed under the jig body and configured to clamp or unclamp the plurality of hairpins; and a clamping drive part configured to drive the hairpin clamping part so that the hairpin clamping part clamps or unclamps the plurality of hairpins, wherein the stator fixing part may unfix the stator when a first driving force is provided from the outside, and may fix the stator when the first driving force is not provided, and the clamping drive part may drive the hairpin clamping part to unclamp the plurality of hairpins when the second driving force is provided from the outside, and may drive the hairpin clamping part to clamp the plurality of hairpins when the second driving force is not provided.

In addition, the jig body may include a plurality of coupling members on at least one of an upper surface, front, back, left, and right sides, and a lower surface thereof, with the plurality of coupling members being coupled to each of the stator assembly loading part, the hairpin cutting part, the hairpin welding part, the stator assembly unloading part, and the jig transfer rail.

In addition, the stator fixing part may include: one pair of pressurizing blocks disposed to face each other, with the stator assembly placed therebetween, and installed to be capable of reciprocating in a direction toward the stator to pressurize or depressurize opposite outer circumferential surfaces of the stator; one pair of connection blocks disposed to face each other, with the stator assembly placed therebetween, and installed to be capable of reciprocating in a direction perpendicular to a moving direction of each of the pair of pressurizing blocks; and one pair of pressure force generating parts that are connected to the one pair of pressurizing blocks, respectively, and respectively pressurize the opposite outer circumferential surfaces of the stator by moving the one pair of pressurizing blocks in directions toward the stator, wherein the one pair of connection blocks may be respectively connected to first ends and second ends of the one pair of pressurizing blocks such that the one pair of connection blocks respectively move in directions apart from the stator when the one pair of pressurizing blocks respectively move in the directions toward the stator.

In addition, each of the pair of pressurizing blocks may include: a plurality of pressure roller members which are disposed radially along an outer circumferential surface of the stator and are in contact with the outer circumferential surface of the stator.

In addition, each of the pair of pressure force generating parts may include: a first fixed block that is fixedly coupled to the upper part of the jig body; and one or more pressure force generating members that are disposed between the first fixed block and each of the pressurizing blocks and provide elastic forces to the pressurizing block in the directions toward the stator.

In addition, each of the pair of pressure force generating parts may further include: at least one pressure force adjustment member that is coupled on one side of the first fixed block and adjusts an elastic force of each of the one or more pressure force generating members.

In addition, the hairpin clamping part may include: a fixed rail part coupled to a lower part of the jig body and disposed to surround an outer circumferential surface of the stator; a first rotation part comprising: a first rotating rail configured to rotate along an inner circumferential surface of the fixed rail part while in contact with the inner circumferential surface of the fixed rail part; and a first rotating plate coupled to the first rotating rail and having a plurality of first insertion holes into which the plurality of hairpins are inserted; and a second rotation part comprising: a second rotating rail configured to rotate along an outer circumferential surface of the fixed rail part while in contact with the outer circumferential surface of the fixed rail part, and a second rotating plate coupled to the second rotating rail to be adjacent to a lower surface of the first rotating plate and having a plurality of second insertion holes into which the plurality of hairpins protruding from the plurality of first insertion holes are inserted, wherein the clamping drive part may rotate the first rotating rail and the second rotating rail in different directions to clamp or unclamp the plurality of hairpins by rotating the first rotating plate and the second rotating plate in different directions while the plurality of hairpins are inserted into the plurality of first insertion holes and the plurality of second insertion holes.

In addition, the clamping drive part may include: a first link member having a first end connected to the first rotating rail and configured to rotate the first rotating rail along the inner circumferential surface of the fixed rail part; a second link member having a first end connected to the second rotating rail and configured to rotate the second rotating rail along the outer circumferential surface of the fixed rail part; and a link driving part configured to drive the first link member and the second link member so that the first rotating rail and the second rotating rail rotate in different directions, wherein the link driving part may include: a second fixed block coupled to the jig body to be disposed on an upper part of the fixed rail part; a first moving block to which a second end of the first link member is rotatably connected, with the first moving block being installed to be capable of reciprocating in a direction toward the stator; a second moving block to which a second end of the second link member is rotatably connected, with the second moving block being installed to be capable of reciprocating in the direction toward the stator; one or more first driving force generating members disposed between the second fixed block and the first moving block, and configured to provide elastic forces that move the first moving block in a direction opposite to the direction toward the stator so that the first link member rotates the first rotating rail in a first direction; one or more second driving force generating members disposed between the second fixed block and the second moving block, and configured to provide elastic forces that move the second moving block in the direction opposite to the direction toward the stator so that the second link member rotates the second rotating rail in a second direction opposite to the first direction; and at least one guide block coupled to the jig body and configured to guide the reciprocating of each of the first moving block and the second moving block.

In addition, the link driving part may further include: at least one first driving force adjustment member coupled to one side of the first moving block, and configured to adjust an elastic force of each of the one or more first driving force generating members; and at least one second driving force adjustment member coupled to one side of the second moving block, and configured to adjust an elastic force of each of the one or more second driving force generating members.

Specific details of other embodiments are included in the detailed description and drawings.

According to the stator assembly machining system according to an embodiment of the present disclosure, by using the stator assembly transfer jig configured such that the stator and the plurality of hairpins are fixedly maintained when no external force is provided, and the fixing thereof is released only when an external force is provided while the stator assembly is seated to perform a series of processes for machining the plurality of hairpins while circularly transferring the stator assembly composed of the stator and the plurality of hairpins, the overall size of the stator assembly machining system is miniaturized and the series of processes are performed independently without interfering with each other, so that waiting time between each process can be minimized, thereby improving the speed of the hairpin machining processes, and the stator and the plurality of hairpins can be stably supported without using a separate drive device while performing the series of processes, thereby improving quality by minimizing the defect rate of machining, such as cutting and welding, and improving accuracy and productivity due to the performance of the consistent work of the hairpin machining processes.

In addition, according to the stator assembly machining system according to an embodiment of the present disclosure, a plurality of coupling members are provided on the upper surface, front, back, left, and right sides, and lower surface of the jig body constituting the stator assembly transfer jig, thereby easily arranging the stator assembly transfer jig in a desired direction and to a desired position before, during, and after the performance of a series of processes.

The effects of the present disclosure are not limited to the effects mentioned above, and other effects not mentioned will be clearly understood by those skilled in the art from the description of the claims.

### Brief description of the drawings

The above and other objectives, features, and other advantages of the present disclosure will be more clearly understood from the following detailed description when taken in conjunction with the accompanying drawings, in which:
Fig. 1 is a perspective view schematically illustrating the structure of a stator assembly;
Fig. 2 is a plan view schematically illustrating the structure of a stator assembly machining system according to an embodiment of the present disclosure;
Fig. 3 is a perspective view illustrating the structure of a stator assembly transfer jig according to an embodiment of the present disclosure;
Fig. 4 is a bottom perspective view illustrating the structure of the stator assembly transfer jig according to an embodiment of the present disclosure;
Fig. 5 is an exploded perspective view illustrating the structure of the stator assembly transfer jig according to an embodiment of the present disclosure;
Fig. 6 is an exploded perspective view illustrating the structure of a jig body that constitutes the stator assembly transfer jig according to an embodiment of the present disclosure;
Fig. 7 is a perspective view illustrating the structure of a stator fixing part that constitutes the stator assembly transfer jig according to an embodiment of the present disclosure;
Fig. 8 is an exploded perspective view illustrating the structure of the stator fixing part that constitutes the stator assembly transfer jig according to an embodiment of the present disclosure;
Figs. 9A and 9B are plan views illustrating the structure of the stator fixing part that constitutes the stator assembly transfer jig according to an embodiment of the present disclosure;
Fig. 10 is a perspective view illustrating the structures of a clamping part and a clamping drive part that constitute the stator assembly transfer jig according to an embodiment of the present disclosure;
Fig. 11 is an exploded perspective view illustrating the structures of the clamping part and the clamping drive part that constitute the stator assembly transfer jig according to an embodiment of the present disclosure;
Fig. 12 is a plan view illustrating the structures of the clamping part and the clamping drive part that constitute the stator assembly transfer jig according to an embodiment of the present disclosure;
Fig. 13 is a cross-sectional view illustrating the structure of the clamping part that constitutes the stator assembly transfer jig according to an embodiment of the present disclosure;
Fig. 14 is an exploded perspective view illustrating the structure of the clamping drive part that constitutes the stator assembly transfer jig according to an embodiment of the present disclosure;
Fig. 15 is a front view illustrating the structure of the clamping drive part that constitutes the stator assembly transfer jig according to an embodiment of the present disclosure; and
Fig. 16 is a cross-sectional view illustrating the structure of the clamping drive part that constitutes the stator assembly transfer jig according to an embodiment of the present disclosure.

### Detailed description of the invention

Hereinafter, preferred embodiments of the present disclosure will be described in detail with reference to the accompanying drawings so that those skilled in the art can easily implement the present disclosure.

When explaining an embodiment, description of technical content that is well known in the technical field to which the present disclosure belongs and that is not directly related to the present disclosure is omitted. This is to convey the gist of the present disclosure more clearly without obscuring the gist by omitting unnecessary explanations.

For the same reason, some components are exaggerated, omitted, or schematically shown in the accompanying drawings. Additionally, the size of each component does not entirely reflect its actual size. In each drawing, identical or corresponding components are assigned the same reference numerals.

Additionally, it will be appreciated that expressions and predicates used herein about terms indicating the orientation of a device or element (e.g., "front", "back", "up", "down", "top", "bottom", "left", "right", and "lateral", etc., are merely used to simplify the description of the present disclosure, but do not simply indicate or imply that the device or element involved must have a particular orientation.

Hereinafter, the present disclosure will be described with reference to the drawings for describing a stator assembly machining system 10 according to an embodiment of the present disclosure.

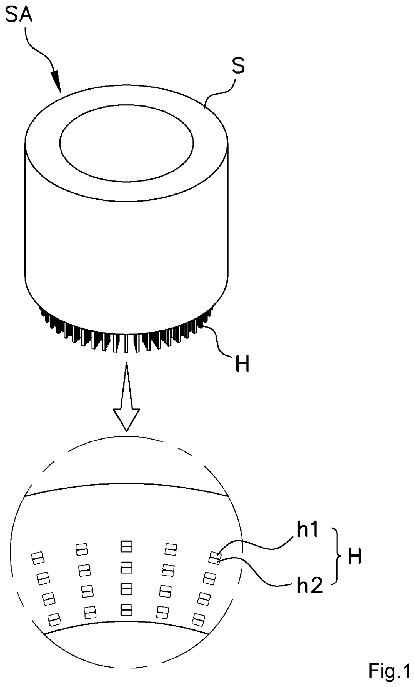

Fig. 1 is a perspective view schematically illustrating the structure of a stator assembly, and

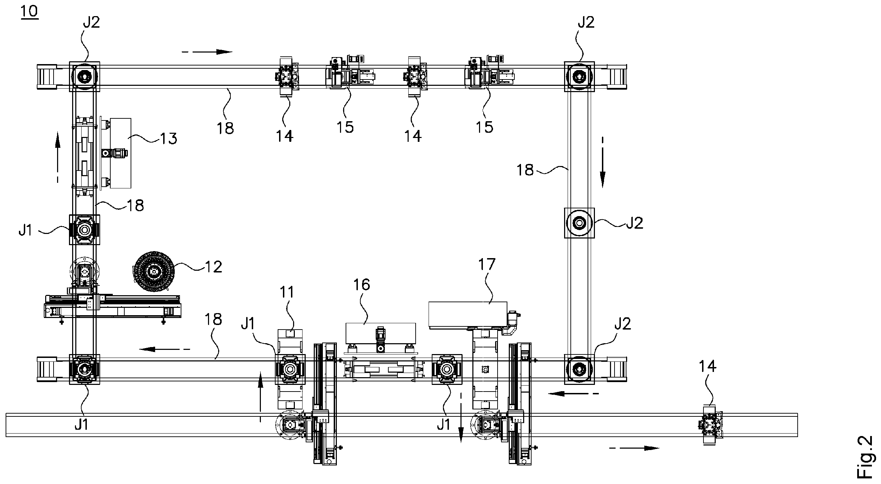

Fig. 2 is a plan view schematically illustrating the structure of the stator assembly machining system according to an embodiment of the present disclosure.

As illustrated in FIG. 1, a stator assembly SA may include a stator S in which a hollow part is formed, and a plurality of hairpins H inserted into the stator S. Although not shown in detail, each of the hairpins H may have a quadrangular cross-section, be inserted into a slot (not shown) formed in the stator S, and may be electrically connected to each other. As will be described later, the plurality of hairpins H may be clamped by being divided into pairs of hairpins h1 and h2 by a hairpin clamping part. For convenience of explanation, the structure of the hairpin H is illustrated in a simplified manner in the present disclosure, and since the structure of the hairpin H is well known, a detailed description thereof is omitted.

As illustrated in FIG. 2, the stator assembly machining system 10 may include a stator assembly loading part 11, a hairpin cutting part 12, a hairpin welding part 15, a stator assembly unloading part 17, and a stator assembly transfer part 18 to perform a series of processes for machining the plurality of hairpins H by receiving the stator assembly SA.

Although not shown in detail, the stator assembly loading part 11 may pick up the stator assembly SA from a state assembly supply part (in the example of FIG. 2, a rail or conveyor) which is separately provided and may load the stator assembly SA onto the stator assembly transfer part 18.

The hairpin cutting part 12 is disposed at a position adjacent to the stator assembly loading part 11 and may perform the cutting process of the end part of each of the plurality of hairpins H of the loaded stator assembly SA. In addition, the hairpin welding part 15 may be disposed at a position adjacent to the hairpin cutting part 12, and may perform the welding process of the end part of each of the plurality of hairpins H.

The stator assembly unloading part 17 may be disposed at a position adjacent to the hairpin welding part 15, and may receive the stator assembly SA in which the end part of each of the plurality of hairpins H is welded and may unload the stator assembly SA to the outside.

Meanwhile, the stator assembly transfer part 18 may include a stator assembly transfer jig 1 in which the stator assembly SA is seated and a jig transfer rail (not shown) which transfers the stator assembly transfer jig 1.

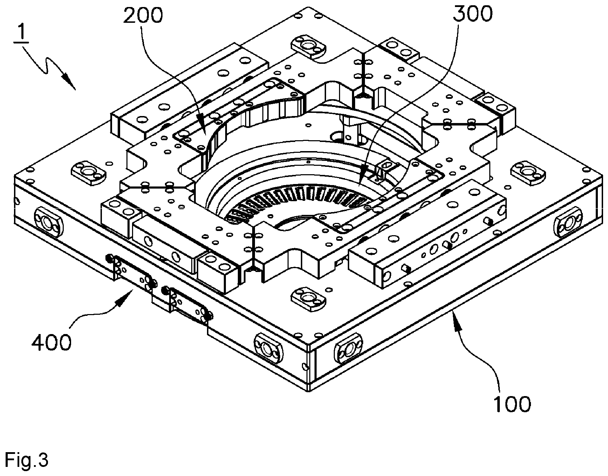

While the jig transfer rail supports the stator assembly transfer jig 1, the jig transfer rail may allow the stator assembly transfer jig 1 to be circularly transferred to the stator assembly loading part 11, the hairpin cutting part 12, the hairpin welding part 15, and the stator assembly unloading part 17 sequentially so that a series of processes (the cutting process, and the welding process, etc.) of the plurality of hairpins H can be performed. The detailed structure of the stator assembly transfer jig 1 will be described in detail later with reference to FIGS. 3 to 16.

Meanwhile, as illustrated in FIG. 2, the stator assembly machining system 10 may further include a first stator assembly inverting part 13, a second stator assembly inverting part 16, and a hairpin inspection part 14.

As illustrated in FIG. 2, the first stator assembly inverting part 13 may be disposed between the hairpin cutting part 12 and the hairpin welding part 15, and may rotate the stator assembly SA by 180 degrees to invert upper and lower parts thereof so as to weld each end part of the plurality of hairpins H.

The second stator assembly inverting part 16 is disposed between the hairpin welding part 15 and the stator assembly unloading part 17, and may rotate an empty jig by 180 degrees to invert upper and lower parts thereof after the stator assembly SA is unloaded to the outside. The hairpin inspection part 14 may inspect the condition of each end part of the plurality of hairpins H before welding each end part of the plurality of hairpins H or after unloading the stator assembly.

Meanwhile, FIG. 2 illustrates the example of the stator assembly machining system 10 in which the stator assembly loading part 11, the hairpin cutting part 12, the first stator assembly inverting part 13, the hairpin inspection part 14, the hairpin welding part 15, the hairpin inspection part 14, the hairpin welding part 15, the second stator assembly inverting part 16, and the stator assembly unloading part 17 is arranged sequentially clockwise along the circular transfer direction of the stator assembly transfer part 18, but the assembly machining system 10 is not limited thereto. The number and arrangement form of process units may be changed by those skilled in the art.

Hereinafter, the structure of the stator assembly transfer jig 1 that constitutes the stator assembly machining system 10 according to an embodiment of the present disclosure will be described in detail with reference to FIGS. 3 to 16.

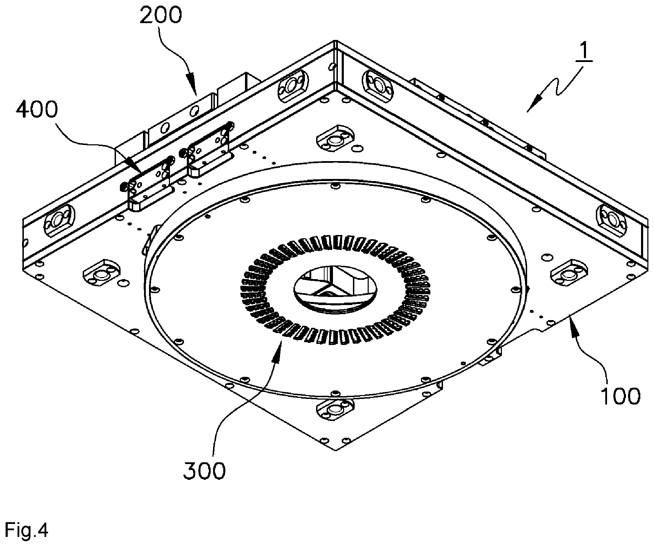

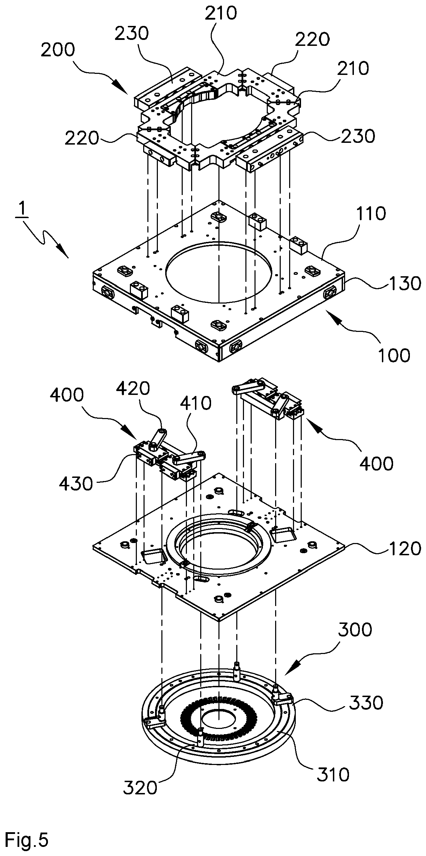

Fig. 3 is a perspective view illustrating the structure of a stator assembly transfer jig according to an embodiment of the present disclosure; FIG. 4 is a bottom perspective view illustrating the structure of the stator assembly transfer jig according to an embodiment of the present disclosure; and FIG. 5 is an exploded perspective view illustrating the structure of the stator assembly transfer jig according to an embodiment of the present disclosure.

As illustrated in FIGS. 3 to 5, the stator assembly transfer jig 1 may include a jig body 100, a stator fixing part 200, a hairpin clamping part 300, and a clamping drive part 400.

The jig body 100 may accommodate the stator assembly SA loaded from the stator assembly loading part 11.

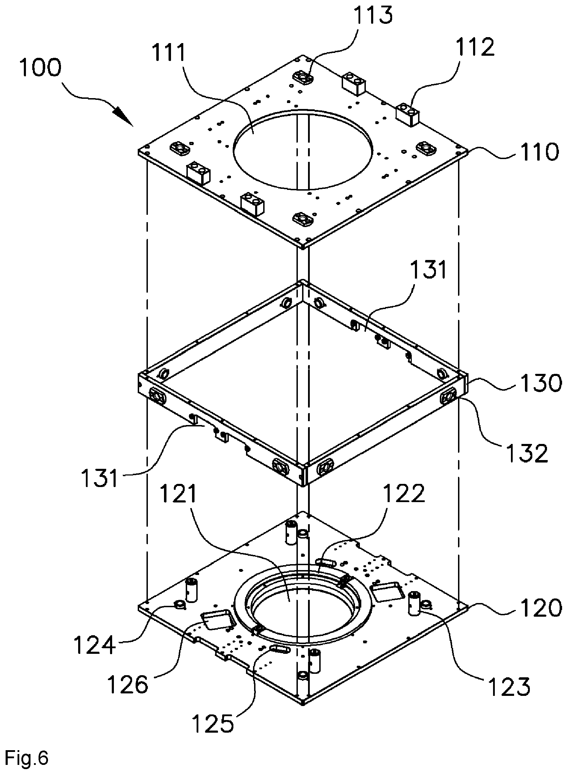

Fig. 6 is an exploded perspective view illustrating the structure of a jig body that constitutes the stator assembly transfer jig according to an embodiment of the present disclosure.

As illustrated in FIG. 6, the jig body 100 has an overall approximately thin cuboidal shape and may include an upper plate 110, a lower plate 120, and four side plates 130.

The upper plate 110 has a thin plate shape, and may have a first through hole 111 formed in a central part thereof so that the stator S passes through the first through hole 111. In addition, a plurality of stopper members 112 may be provided on the upper surface of the upper plate 110 to restrain the movement of each of one pair of connection blocks 220 that constitute the stator fixing part 200.

The lower plate 120 is arranged to be spaced downward apart from the upper plate 110, has a thin plate shape corresponding to the upper plate 110, and has a second through hole 121 formed in a central part thereof so that the stator S passes through the second through hole 121, wherein a stator seating end 122, in which the lower end of the stator S is seated, may be formed on the edge of the second through hole 121. In addition, a plurality of support shafts 123 may be installed on the upper surface of the lower plate 120 so that a distance between the lower plate 120 and the upper plate 110 is maintained. In addition, as illustrated in FIG. 6, the lower plate 120 may have a first shaft penetration part 125 and a second shaft penetration part 126 formed at positions adjacent to the clamping drive part 400 installed on the upper surface of the lower plate 120.

The four side plates 130 may have thin plate shapes, and may be placed respectively on the sides of front, back, and left, and right along the edges of the upper plate 110 and the lower plate 120. As illustrated in FIG. 6, among the four side plates 130, each of two side plates 130 facing each other may have one pair of clamping drive grooves 131 formed therein so that a first moving block 432 and a second moving block 433 constituting the clamping drive part 400 are exposed to the outside. An external driving means (not shown) may be disposed in each of the pair of clamping drive grooves 131 to provide an external force (a second driving force to be described later) to each of the first moving block 432 and the second moving block 433.

Preferably, the jig body 100 may include a plurality of coupling members 113, 124, and 132 on at least one of upper surface, front, back, left, and right sides, and lower surface thereof, with the plurality of coupling members being coupled to each of the stator assembly loading part 11, the hairpin cutting part 12, the hairpin welding part 15, the stator assembly unloading part 17, and the jig transfer rail.

That is, as illustrated in FIG. 6, a plurality of upper coupling members 113 may be installed on the upper surface of the upper plate 110, a plurality of lower coupling members 124 may be installed on the lower surface of the lower plate 120, and a plurality of side coupling members 132 may be installed on the side of each of the four side plates 130.

The upper coupling members 113, the lower coupling members 124, and side coupling members 132 may be coupled to separate driving means or coupling means to arrange the stator assembly transfer jig 1 in a desired direction and to a desired position before, during, and after performing the process.

For example, the stator assembly transfer part 18 is provided with a plurality of coupling means (not shown) on the upper surface of a transfer block (not shown) installed on the jig transfer rail, with the plurality of coupling means being coupled to the plurality of lower coupling members 124, and may transfer the stator assembly transfer jig 1 coupled to the upper surface of the transfer block.

For another example, the first stator assembly inverting part 13 may invert the upper and lower parts of the stator assembly SA by rotating the stator assembly transfer jig 1 by 180 degrees after coupling a plurality of inverting means (not shown) to the plurality of side coupling members 132 installed on each of two side plates 130 facing each other.

Referring back to FIGS. 3 to 5, the stator fixing part 200 is disposed on the upper part of the jig body 100 and may fix or unfix the stator S.

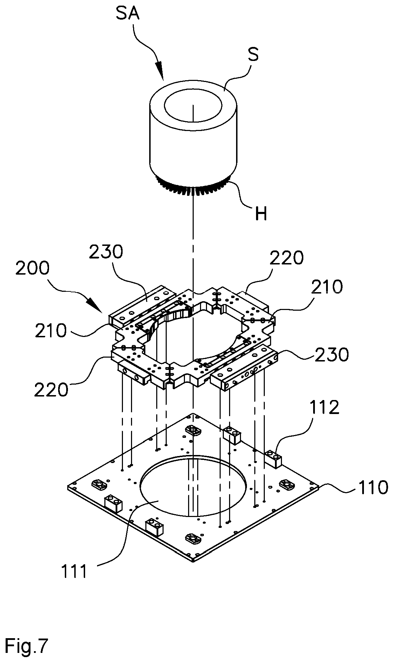

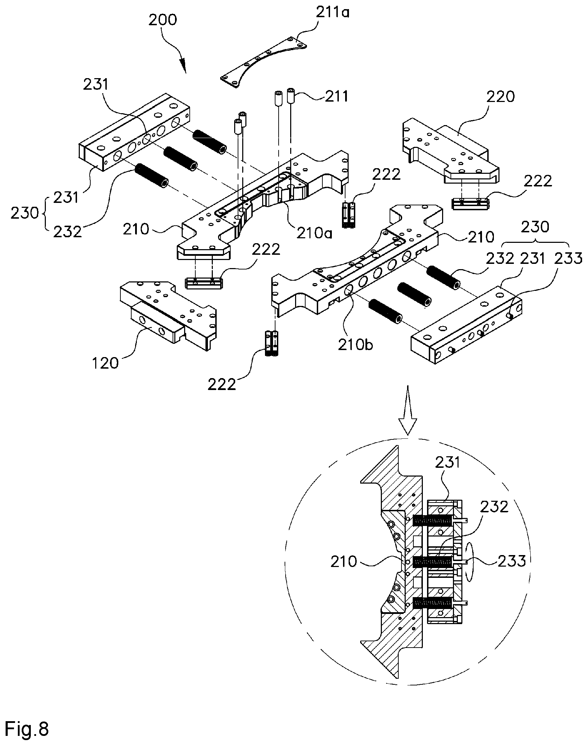

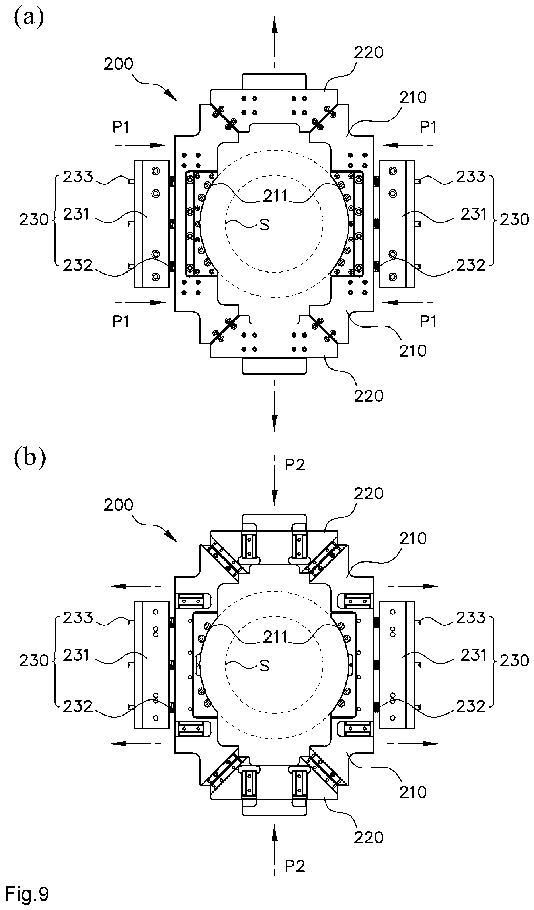

Fig. 7 is a perspective view illustrating the structure of a stator fixing part that constitutes the stator assembly transfer jig according to an embodiment of the present disclosure; FIG. 8 is an exploded perspective view illustrating the structure of the stator fixing part that constitutes the stator assembly transfer jig according to an embodiment of the present disclosure; and FIGS. 9A and 9B are plan views illustrating the structure of the stator fixing part that constitutes the stator assembly transfer jig according to an embodiment of the present disclosure.

As illustrated in FIGS. 7 to 9, the stator fixing part 200 may include one pair of pressurizing blocks 210, the one pair of connection blocks 220, and one pair of pressure force generating parts 230.

The one pair of pressurizing blocks 210 may be arranged to face each other with the stator assembly SA placed therebetween, and may be installed to reciprocate in a direction toward the stator S to pressurize or depressurize the opposite outer circumferential surfaces of the stator S. As illustrated in FIG. 9B, the pressing blocks 210 are respectively installed on a pair of first guide members 212, such as a linear motion (LM) guide, installed side by side on the upper surface of the upper plate 110, so that reciprocating thereof may be stably guided.

Preferably, as illustrated in FIGS. 8, 9A, and 9B, each of the pressurizing blocks 210 may include a plurality of pressure roller members 211 disposed radially along the outer circumferential surface of the stator S on contact portions thereof, on which the plurality of pressure roller members 211 contact and pressurize the outer circumferential surface of the stator S, with plurality of pressure roller members 211 being in contact with the outer circumferential surface of the stator S. Accordingly, the plurality of pressure roller members 211 may stably support the outer circumferential surface of the stator S even when the stator S is rotated by the clamping drive part 400.

Each of the pair of connection blocks 220 may be disposed to face each other, with the stator assembly SA placed therebetween, and may be installed to be capable of reciprocating in a direction perpendicular to the moving direction of each of the pair of pressurizing blocks 210. As illustrated in FIG. 9B, the connection blocks 220 are respectively installed on a pair of second guide members 221, such as a linear motion (LM) guide, installed side by side on the upper surface of the upper plate 110, so that reciprocating thereof may be stably guided.

The one pair of pressure force generating parts 230 may be installed on the upper surface of the upper plate 110 and be connected to the one pair of pressurizing blocks 210, respectively, so that the one pair of pressure force generating parts 230 may respectively pressurize the opposite outer circumferential surfaces of the stator S by moving the one pair of pressurizing blocks 210 in directions toward the stator S.

Preferably, as illustrated in FIGS. 9A and 9B, the one pair of connection blocks 220 may be respectively connected to the first ends and second ends of the one pair of pressurizing blocks 210 such that the one pair of connection blocks 220 respectively move in directions apart from the stator S when the one pair of pressurizing blocks 210 respectively move in directions toward the stator S.

That is, as illustrated in FIG. 9B, the one pair of pressurizing blocks 210 and the one pair of connection blocks 220 may have opposite ends thereof formed slantingly so that the opposite ends are in contact with each other, and may be installed to be movable relative to each other by four first connecting members 222 with the shape of a cross roller guide on each of the lower ends of the opposite ends in contact with each other.

Accordingly, as illustrated in FIG. 9A, the one pair of pressing blocks 210 and the one pair of connection blocks 220 are connected to be movable to each other to have an overall quadrangular shape, and when the one pair of pressurizing blocks 210 respectively move in directions toward the stator S (in the example of FIG. 9A, left and right directions) by the pressure force P1 supplied from each of the pair of pressure force generating parts 230, the one pair of connection blocks 220 may move in directions apart from the stator S (in the example of FIG. 9A, up and down directions) while being guided by the four first connecting members 222.

As illustrated in FIG. 8, each of the pressure force generating part 230 may include a first fixed block 231 that is fixedly coupled to the upper part of the jig body 100, and one or more pressure force generating members 232 that are disposed between the first fixed block 231 and the pressurizing block 210 and provide elastic forces to the pressurizing block 210 in a direction toward the stator S. Preferably, the pressure force generating member 232 may move the pressurizing block 210 in the direction toward the stator S and pressurize the outer circumferential surface of the stator S to fix the stator S by using a compression spring that provides elastic force without using a separate driving actuator, such as a motor or cylinder.

Meanwhile, as illustrated in FIGS. 8, 9A, and 9B, each of the pressure force generating part 230 may further include at least one pressure force adjustment member 233 which is coupled on one side of the first fixed block 231 and adjusts the elastic force of each of the one or more pressure force generating members 232.

That is, as illustrated in FIG. 8, the pressure force adjustment member 233 may have the shape of a bolt fastened to a female thread formed in the one side of the first fixed block 231, and may support an end of the pressure force generating member 232 while being inserted into the first fixed block 231 in which the pressure force generating member 232 is accommodated. When the pressure force adjustment member 233 moves forward or backward due to a rotation thereof, the pressure force adjustment member 233 may adjust the length of the pressure force generating member 232 disposed between the first fixed block 231 and the pressurizing block 210 to adjust the elastic force of the pressure force generating member 232.

Meanwhile, as illustrated in FIG. 9A, when the first driving force is not provided from the outside, the one pair of pressurizing blocks 210 may be respectively moved in directions toward the stator S (in the example of FIG. 9A, left and right directions) by the pressure force P1 supplied from each of the pair of pressure force generating parts 230, and may fix the stator S by pressurizing the opposite outer circumferential surfaces of the stator S.

On the contrary, as illustrated in FIG. 9B, when the first driving force is provided from the outside, particularly, when a first driving force P2 is provided in each of directions toward the stator S (in the example of FIG. 9B, up and down directions), the one pair of pressurizing blocks 210 may respectively move in directions apart from the stator S (in the example of FIG. 9B, left and right directions) while being guided by the four first connecting members 222 and may unfix the stator S.

Referring back to FIGS. 3 to 5, the hairpin clamping part 300 is disposed on the lower side of the jig body 100 and may clamp or unclamp the plurality of hairpins H. In addition, as illustrated in FIG. 5, while the clamping drive part 400 is coupled to the upper surface of the lower plate 120 constituting the jig body 100 and is disposed inside the jig body 100, the clamping drive part 400 may be connected through the first shaft penetration part 125 and the second shaft penetration part 126 formed in the lower plate 120 to the hairpin clamping part 300 disposed on the lower side of the jig body 100, and may drive the hairpin clamping part 300 so that the hairpin clamping part 300 clamps or unclamps the plurality of hairpins H.

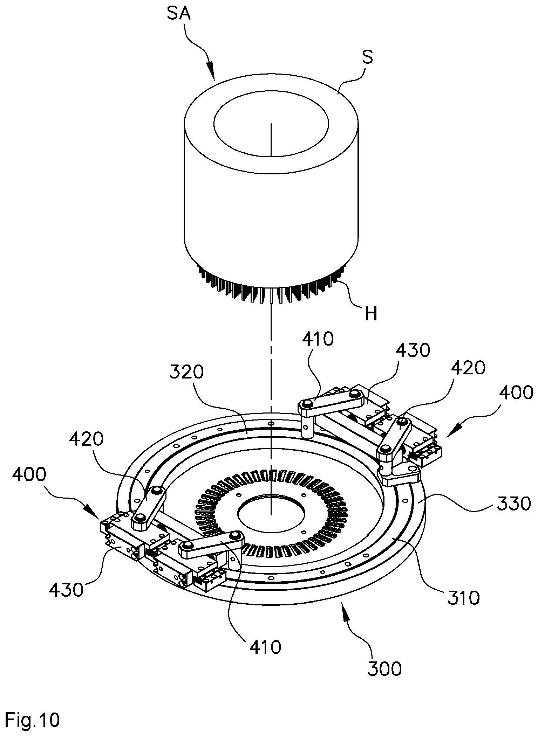

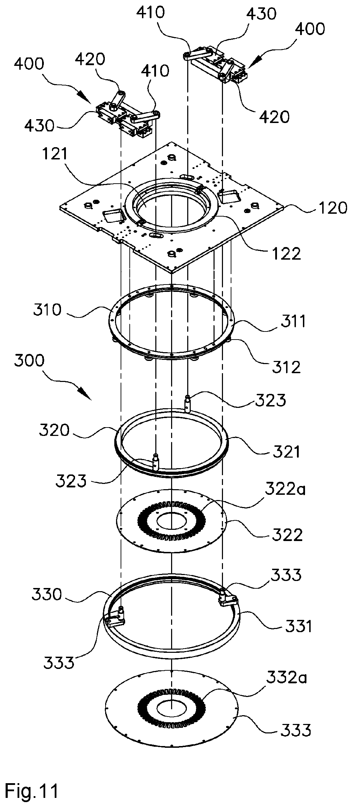

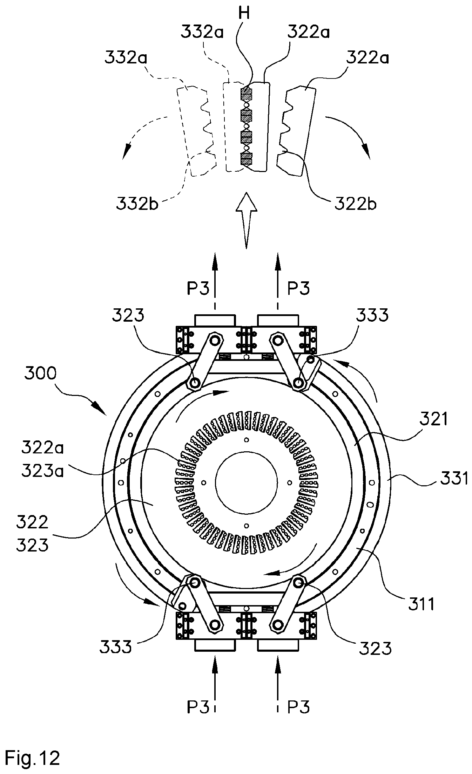

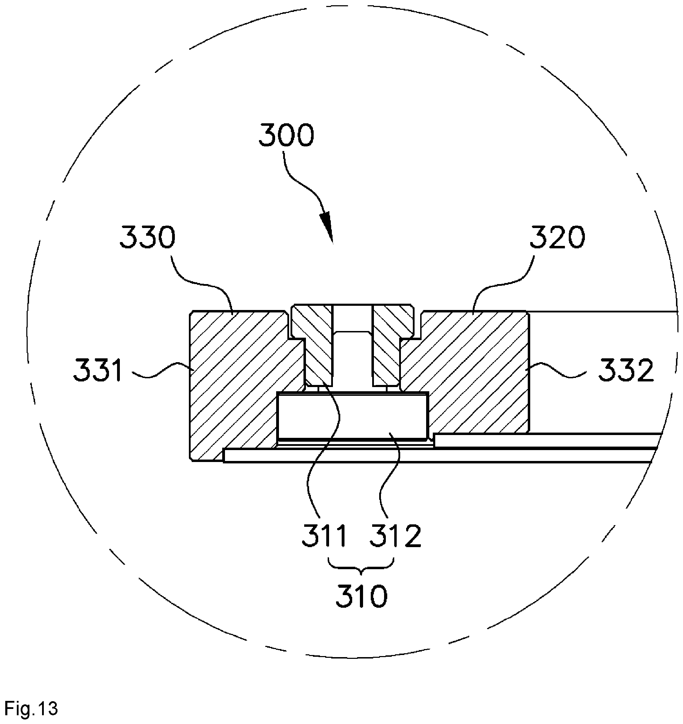

Fig. 10 is a perspective view illustrating the structures of a clamping part and a clamping drive part that constitute the stator assembly transfer jig according to an embodiment of the present disclosure; FIG. 11 is an exploded perspective view illustrating the structures of the clamping part and the clamping drive part that constitute the stator assembly transfer jig according to an embodiment of the present disclosure; FIG. 12 is a plan view illustrating the structures of the clamping part and the clamping drive part that constitute the stator assembly transfer jig according to an embodiment of the present disclosure; and FIG. 13 is a cross-sectional view illustrating the structure of the clamping part that constitutes the stator assembly transfer jig according to an embodiment of the present disclosure.

As illustrated in FIGS. 10 to 13, the hairpin clamping part 300 may include a fixed rail part 310, a first rotation part 320, and a second rotation part 330.

The fixed rail part 310 may be coupled to the lower part of the jig body 100 and may be arranged to surround the outer circumferential surface of the stator S. As illustrated in FIG. 11, the fixed rail part 310 may include a circular rail 311 coupled to the lower surface of the lower plate 120 to be concentric to the second through hole 121 formed in the lower plate 120, and rotation guide members 312, such as bearings, installed at predetermined intervals on the lower surface of the circular rail 311.

The first rotation part 320 may include a first rotating rail 321 that rotates along the inner circumferential surface of the fixed rail part 310 while in contact with the inner circumferential surface of the fixed rail part 310, and a first rotating plate 322 that is coupled to the first rotating rail 321 and has a plurality of first insertion holes 322a into which the plurality of hairpins H is inserted. As illustrated in FIG. 11, the first rotating rail 321 may include a first connecting shaft 323 installed on an upper surface thereof, with an end of a first link member 410 of the clamping drive part 400 being rotatably connected to the first connecting shaft 323.

In addition, the second rotation part 330 may include a second rotating rail 331 that rotates along the outer circumferential surface of the fixed rail part 310 while in contact with the outer circumferential surface of the fixed rail part 310, and a second rotating plate 332 that is coupled to the second rotating rail 331 to be adjacent to the first rotating plate 322 and has a plurality of second insertion holes 332a into which the plurality of hairpins H protruding from the plurality of first insertion holes 322a are inserted. As illustrated in FIG. 11, the second rotating rail 331 may have a second connecting shaft 333 installed on an upper surface thereof, with an end of a second link member 420 of the clamping drive part 400 being rotatably connected to the second connecting shaft 333.

As illustrated in FIG. 12, the plurality of first insertion holes 322a and the plurality of second insertion holes 332a may be formed radially about the rotation axis of the first rotating plate 322 or the second rotating plate 332 to correspond to the arrangement of each of the plurality of hairpins H protruding radially on the lower end of the stator S with a disk shape.

As illustrated in FIG. 12, each of the plurality of first insertion holes 322a and each of the plurality of second insertion holes 332a may include a plurality of first partition protrusions 322b and a plurality of second partition protrusions 332b formed respectively on one sides thereof to separate the plurality of hairpins H into pairs h1 and h2. In this case, the plurality of first partition protrusions 322b formed in each of the first insertion holes 322a and the plurality of second partition protrusions 332b formed in each of the second insertion holes 332a corresponding thereto may be formed to correspond to one sides thereof facing each other (in the example of FIG. 12, the left side of the first insertion hole 322a, and the right side of the second insertion hole 332a), and when the first insertion hole 322a and the second insertion hole 332a overlap, the hairpins H may be separated into pairs h1 and h2 and be inserted into space between the plurality of first partition protrusions 322b and the plurality of second partition protrusions 332b.

Accordingly, in the state in which the plurality of hairpins H are inserted, when the first rotating plate 322 and the second rotating plate 332 are rotated in different directions by the clamping drive part 400, the first insertion hole 322a and the second insertion hole 332a may clamp or unclamp the plurality of hairpins H.

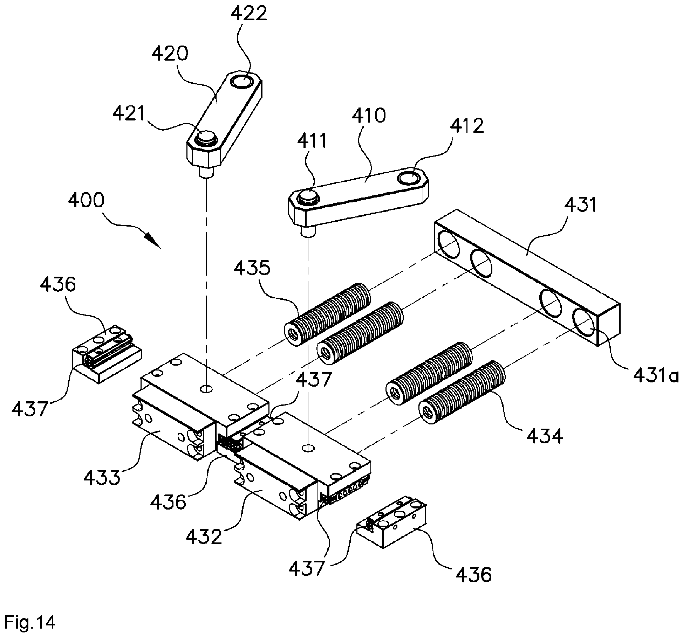

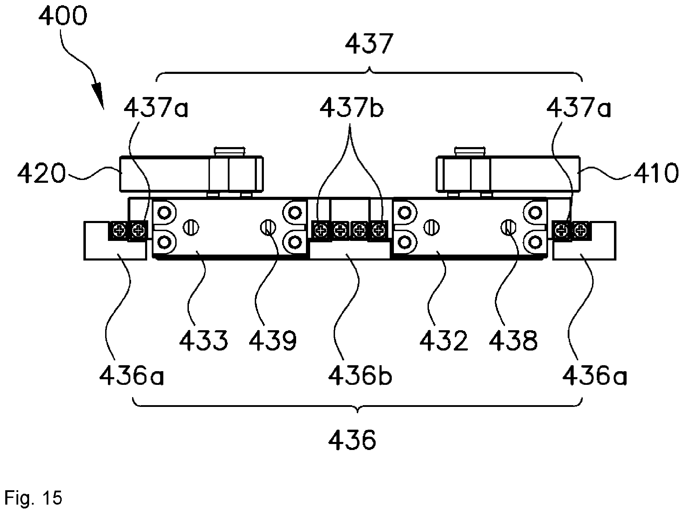

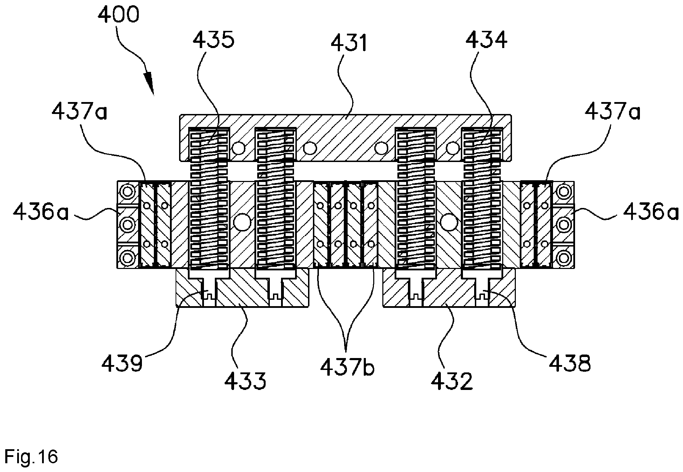

Fig. 14 is an exploded perspective view illustrating the structure of the clamping drive part that constitutes the stator assembly transfer jig according to an embodiment of the present disclosure; FIG. 15 is a front view illustrating the structure of the clamping drive part that constitutes the stator assembly transfer jig according to an embodiment of the present disclosure; and FIG. 16 is a cross-sectional view illustrating the structure of the clamping drive part that constitutes the stator assembly transfer jig according to an embodiment of the present disclosure.

As illustrated in FIGS. 14 to 16, the clamping drive part 400 may include the first link member 410, the second link member 420, and a link driving part 430.

The first link member 410 may be connected rotatably to the first connecting shaft 323 installed on the first rotating rail 321 through a first shaft coupling hole 412 formed on a first end of the first link member 410, and may rotate the first rotating rail 321 along the inner circumferential surface of the fixed rail part 310 by the link driving part 430. In addition, the second link member 420 may be connected rotatably to the second connecting shaft 333 installed on the second rotating rail 331 through a second shaft coupling hole 422 formed on a first end of the second link member 420, and may rotate the second rotating rail 331 along the outer circumferential surface of the fixed rail part 310 by the link driving part 430.

The link driving part 430 may drive the first link member 410 and the second link member 420 so that the first rotating rail 321 and the second rotating rail 331 rotate in different directions.

Preferably, the link driving part 430 may include a second fixed block 431, the first moving block 432, the second moving block 433, one or more first driving force generating members 434, one or more second driving force generating members 435, and one or more guide blocks 436.

As illustrated in FIGS. 11 and 14, the second fixed block 431 may be coupled to the upper surface of the lower plate 120 to be disposed on the upper part of the fixed rail part 310.

The first moving block 432 may be connected to the first link member 410 so that a second end of the first link member 410 is rotated by a first hinge member 411, and may be installed to reciprocate in a direction toward the stator S. In addition, the second moving block 433 may be connected to the second link member 420 so that a second end of the second link member 420 is rotated by a second hinge member 421, and may be installed to reciprocate in the direction toward the stator S.

The first driving force generating member 434 may be disposed between the second fixed block 431 and the first moving block 432, and may provide an elastic force that moves the first moving block 432 in a direction opposite to the direction toward the stator S so that the first link member 410 rotates the first rotating rail 321 in a first direction. In addition, the second driving force generating member 435 may be disposed between the second fixed block 431 and the second moving block 433, and may provide an elastic force that moves the second moving block 433 in a direction opposite to the direction toward the stator S so that the second link member 420 rotates the second rotating rail 331 in a second direction which is a direction opposite to the first direction. Preferably, each of the first driving force generating member 434 and the second driving force generating member 435 has a structure to clamp or unclamp the plurality of hairpins H by using a compression spring that provides elastic force without using a separate driving actuator such as a motor or cylinder.

The guide block 436 may be coupled to the upper surface of the lower plate 120 and may guide the reciprocating movement of each of the first moving block 432 and the second moving block 433. As illustrated in FIGS. 14 and 15, the guide block 436 may be disposed at a position adjacent to each of the first moving block 432 and the second moving block 433, and second connecting members 437 with the shape of a cross roller guide may be installed on a portion in contact with each of the first moving block 432 and the second moving block 433.

In FIGS. 14 and 15, three guide blocks 436 are installed at a side of the first moving block 432 (in the example of FIG. 15, a left side), a side of the second moving block 433 (in the example of FIG. 15, a right side), and at a position between the first moving block 432 and the second moving block 433, and four second connecting members 437 are installed between the first moving block 432, the second moving block 433, and the three guide blocks 436, but the number and arrangement form of the guide blocks 436, and the number and arrangement form of the second connecting members 437 may be changed by those skilled in the art.

Meanwhile, as illustrated in FIGS. 15 and 16, the link driving part 430 may further include at least one first driving force adjustment member 438 and at least one second driving force adjustment member 439 that adjust the elastic forces of the first driving force generating member 434 and the second driving force generating member 435, respectively.

The first driving force adjustment member 438 may be coupled to a side of the first moving block 432, and may adjust the elastic force of each of the first driving force generating members 434. In addition, the second driving force adjustment member 439 may be coupled to a side of the second moving block 433, and may adjust the elastic force of each of the second driving force generating members 435.

As illustrated in FIG. 16, the first driving force adjustment member 438 and the second driving force adjustment member 439 have the shapes of bolts fastened to female threads formed on one sides of the first moving block 432 and the second moving block 433, respectively, and may support one ends of the first driving force generating member 434 and the second driving force generating member 435 inserted into the first moving block 432 and the second moving block 433, respectively. When the first driving force adjustment member 438 and the second driving force adjustment member 439 move forward or backward due to rotations thereof, the first driving force adjustment member 438 and the second driving force adjustment member 439 may respectively adjust the lengths of the first driving force generating member 434 and the second driving force generating member 435 disposed between the second fixed block 431 and the first moving block 432 and between the second fixed block 431 and the second moving block 433 to adjust the elastic forces of the first driving force generating member 434 and the second driving force generating member 435.

Meanwhile, as illustrated in FIG. 12, when the second driving force is not provided from the outside, the first moving block 432 and the second moving block 433 may be respectively moved in directions opposite to directions toward the stator S by elastic forces P3 provided from the first driving force generating member 434 and the second driving force generating member 435, the first link member 410 may rotate the first rotating rail 321 and the first rotating plate 322 in the first direction(in the example of FIG. 12, clockwise), and the second link member 420 may rotate the second rotating rail 331 and the second rotating plate 332 in the second direction (in the example of FIG. 12, counterclockwise) opposite to the first direction, and thus the first insertion hole 322a and the second insertion hole 332a may clamp the plurality of hairpins H.

On the contrary, when the second driving force (not shown) is not provided from the outside, particularly, when the second driving force is provided through the one pair of clamping drive grooves 131 formed in the side plates 130 of the jig body 100 from the outside, each of the first moving block 432 and the second moving block 433 may be moved in a direction toward the stator S by the second driving force, the first link member 41 may rotate the first rotating rail 321 and the first rotating plate 322 in the second direction(in the example of FIG. 12, counterclockwise), and the second link member 420 may rotate the second rotating rail 331 and the second rotating plate 332 in the first direction (in the example of FIG. 12, clockwise), and thus the first insertion hole 322a and the second insertion hole 332a may unclamp the plurality of hairpins H.

Meanwhile, although in this specification and drawings, preferred embodiments of the present disclosure are disclosed, and specific terms are used, the terms are used only in a general sense to easily explain the technical content of the present disclosure and aid understanding of the present disclosure, but has no intention to limit the scope of the present disclosure. It is obvious to those skilled in the art that in addition to the embodiments disclosed herein, other modifications based on the technical idea of the present disclosure may be implemented.

## Claims

1. A stator assembly machining system configured to perform a series of processes for machining a plurality of hairpins by receiving a stator assembly composed of a stator and the plurality of hairpins inserted into the stator, the system comprising:
a stator assembly loading part configured to load the stator assembly;
a hairpin cutting part configured to perform a cutting process of an end part of each of the plurality of hairpins by receiving the stator assembly from the stator assembly loading part;
a hairpin welding part configured to perform a welding process of the end part of each of the plurality of hairpins by receiving the stator assembly from the hairpin cutting part;
a stator assembly unloading part configured to unload the stator assembly supplied from the hairpin welding part; and
a stator assembly transfer part configured to transfer the stator assembly to the stator assembly loading part, the hairpin cutting part, the hairpin welding part, and the stator assembly unloading part while supporting the stator assembly,
wherein the stator assembly transfer part comprises:
a stator assembly transfer jig that supports the stator and the plurality of hairpins while the stator assembly loaded from the stator assembly loading part is seated therein; and
a jig transfer rail that allows the stator assembly transfer jig to be circularly transferred to the stator assembly loading part, the hairpin cutting part, the hairpin welding part, and the stator assembly unloading part sequentially while supporting the stator assembly transfer jig.

2. The system of claim 1, wherein the stator assembly transfer jig comprises:
a jig body configured to accommodate the stator assembly;
a stator fixing part disposed on an upper part of the jig body and configured to fix or unfix the stator;
a hairpin clamping part disposed under the jig body and configured to clamp or unclamp the plurality of hairpins; and
a clamping drive part configured to drive the hairpin clamping part so that the hairpin clamping part clamps or unclamps the plurality of hairpins,
wherein the stator fixing part unfixes the stator when a first driving force is provided from the outside, and fixes the stator when the first driving force is not provided, and
the clamping drive part drives the hairpin clamping part to unclamp the plurality of hairpins when the second driving force is provided from the outside, and drives the hairpin clamping part to clamp the plurality of hairpins when the second driving force is not provided.

3. The system of claim 2, wherein the jig body comprises a plurality of coupling members on at least one of an upper surface, front, back, left, and right sides, and a lower surface thereof, with the plurality of coupling members being coupled to each of the stator assembly loading part, the hairpin cutting part, the hairpin welding part, the stator assembly unloading part, and the jig transfer rail.

4. The system of claim 2, wherein the stator fixing part comprises:
one pair of pressurizing blocks disposed to face each other, with the stator assembly placed therebetween, and installed to be capable of reciprocating in a direction toward the stator to pressurize or depressurize opposite outer circumferential surfaces of the stator;
one pair of connection blocks disposed to face each other, with the stator assembly placed therebetween, and installed to be capable of reciprocating in a direction perpendicular to a moving direction of each of the pair of pressurizing blocks; and
one pair of pressure force generating parts that are connected to the one pair of pressurizing blocks, respectively, and respectively pressurize the opposite outer circumferential surfaces of the stator by moving the one pair of pressurizing blocks in directions toward the stator,
wherein the one pair of connection blocks are respectively connected to first ends and second ends of the one pair of pressurizing blocks such that the one pair of connection blocks respectively move in directions apart from the stator when the one pair of pressurizing blocks respectively move in the directions toward the stator.

5. The system of claim 4, wherein each of the pair of pressurizing blocks comprises:
a plurality of pressure roller members which are disposed radially along an outer circumferential surface of the stator and are in contact with the outer circumferential surface of the stator.

6. The system of claim 4, wherein each of the pair of pressure force generating parts comprises:
a first fixed block that is fixedly coupled to the upper part of the jig body; and
one or more pressure force generating members that are disposed between the first fixed block and each of the pressurizing blocks and provide elastic forces to the pressurizing block in the directions toward the stator.

7. The system of claim 6, wherein each of the pair of pressure force generating parts further comprises:
at least one pressure force adjustment member that is coupled on one side of the first fixed block and adjusts an elastic force of each of the one or more pressure force generating members.

8. The system of claim 2, wherein the hairpin clamping part comprises:
a fixed rail part coupled to a lower part of the jig body and disposed to surround an outer circumferential surface of the stator;
a first rotation part comprising: a first rotating rail configured to rotate along an inner circumferential surface of the fixed rail part while in contact with the inner circumferential surface of the fixed rail part; and a first rotating plate coupled to the first rotating rail and having a plurality of first insertion holes into which the plurality of hairpins are inserted; and
a second rotation part comprising: a second rotating rail configured to rotate along an outer circumferential surface of the fixed rail part while in contact with the outer circumferential surface of the fixed rail part, and a second rotating plate coupled to the second rotating rail to be adjacent to a lower surface of the first rotating plate and having a plurality of second insertion holes into which the plurality of hairpins protruding from the plurality of first insertion holes are inserted, wherein the clamping drive part rotates the first rotating rail and the second rotating rail in different directions to clamp or unclamp the plurality of hairpins by rotating the first rotating plate and the second rotating plate in different directions while the plurality of hairpins are inserted into the plurality of first insertion holes and the plurality of second insertion holes.

9. The system of claim 8, wherein the clamping drive part comprises:
a first link member having a first end connected to the first rotating rail and configured to rotate the first rotating rail along the inner circumferential surface of the fixed rail part;
a second link member having a first end connected to the second rotating rail and configured to rotate the second rotating rail along the outer circumferential surface of the fixed rail part; and
a link driving part configured to drive the first link member and the second link member so that the first rotating rail and the second rotating rail rotate in different directions,
wherein the link driving part comprises:
a second fixed block coupled to the jig body to be disposed on an upper part of the fixed rail part;
a first moving block to which a second end of the first link member is rotatably connected, with the first moving block being installed to be capable of reciprocating in a direction toward the stator;
a second moving block to which a second end of the second link member is rotatably connected, with the second moving block being installed to be capable of reciprocating in the direction toward the stator;
one or more first driving force generating members disposed between the second fixed block and the first moving block, and configured to provide elastic forces that move the first moving block in a direction opposite to the direction toward the stator so that the first link member rotates the first rotating rail in a first direction;
one or more second driving force generating members disposed between the second fixed block and the second moving block, and configured to provide elastic forces that move the second moving block in the direction opposite to the direction toward the stator so that the second link member rotates the second rotating rail in a second direction opposite to the first direction; and at least one guide block coupled to the jig body and configured to guide the reciprocating of each of the first moving block and the second moving block.

10. The system of claim 9, wherein the link driving part further comprises:
at least one first driving force adjustment member coupled to one side of the first moving block, and configured to adjust an elastic force of each of the one or more first driving force generating members; and at least one second driving force adjustment member coupled to one side of the second moving block, and configured to adjust an elastic force of each of the one or more second driving force generating members.
